# EUROPÄISCHE PATENTSCHRIFT

(11) **EP 0 473 118 B1**
(45) Veröffentlichungstag und Bekanntmachung des Hinweises auf die Patenterteilung: **06.07.1994**
(21) Anmeldenummer: 91114371.7
(22) Anmeldetag: 27.08.1991
(51) Int. Cl.: F16K 51/00, F16K 1/00

(54) **Armatur**
Fitting
Armature

(30) Priorität: 30.08.1990 DE 4027460
(43) Veröffentlichungstag der Anmeldung: 04.03.1992
(73) Patentinhaber: ARI-ARMATUREN ALBERT RICHTER GmbH & Co.KG., D-33758 Schloss Holte-Stukenbrock (DE)
(72) Erfinder: Gerold, Hans-Jürgen, W-4800 Bielefeld 1 (DE); Koch, Hans-Werner, W-4794 Hövelhof (DE)
(74) Vertreter: Loesenbeck, Karl-Otto, Dipl.-Ing.

(56) Entgegenhaltungen:
- DE-A- 1 500 030
- DE-A- 2 359 751
- DE-A- 3 125 627
- DE-B- 2 642 641
- GB-A- 1 319 583
- US-A- 1 890 357

## Beschreibung

Die Erfindung betrifft eine Armatur mit einem oberen, den Stellmechanismus aufnehmenden Gehäusebereich. Bei manchen Einsatzbereichen für derartige Armaturen wie beispielsweise Ventile oder dergleichen, insbesondere bei den Einsatzbereichen Heizung, Klima, Lüftung oder auch im Zusammenhang mit Wärmepumpen ist die Situation anzutreffen, daß das üblicherweise aus Metall bestehende Armaturengehäuse infolge des Kontaktes mit dem durchströmenden Medium kälter ist als die Umgebungsluft. Es ist zwar im Regelfall möglich, die Isolierungen der an- und abgehenden Rohrleitungen auch noch mit auf den unteren Gehäusebereich einer derartigen Armatur zu erstrecken, in dem sich der Ventilsitz befindet. Der obere Gehäusebereich, der üblicherweise den Stellmechanismus beinhaltet, wie beispielsweise die heb- und senkbare Stellspindel bei einem Hubventil, die Spindelmutter und, obenauf sitzend, das Handrad, wird von der Rohrleitungsisolierung nicht mehr erfaßt. Hier kommt es dann in der genannten Situation häufig zu einer nicht unbeträchtlichen Kondensatbildung auf dem oberen Gehäusebereich der Armatur. Es besteht von daher erhöhte Rostgefahr einschließlich einer Feuchtigkeitsbelastung der gesamten Umgebung durch das herabtropfende Kondensat.

Der vorliegenden Erfindung liegt von daher die Aufgabe zugrunde, eine Armatur zu schaffen, bei der eine Kondensatbildung wirksam vermieden ist. Gemäß des Erfindung wird diese Aufgabe durch eine Armatur nach Patentanspruch 1 gelöst.

Der obere, bezüglich der Kondensatbildung in besonderem Maße gefährdete Bereich des Gehäuses ist gegenüber der in der Phase möglicher Kondensatbildung wärmeren Umgebungsluft durch die Isolierkappe aus dem Material geringer Wärmeleitfähigkeit in Verbindung mit dem bezüglich der Wärmeübertragung stark isolierend wirkenden abgeschlossenen Luftraum zwischen Isolierkappe und Gehäusewand so stark abisoliert, daß eine Kondensatbildung auf der metallischen Gehäusewand wirksam vermieden ist. Dadurch, daß durch die Abdichtung der Luftkammer auch praktisch keine Luftzirkulation zwischen dem Innenraum der Luftkammer und der Umgebungsluft stattfindet, ist die Feuchtigkeitsbildung von vornherein deutlich reduziert. Falls sich überhaupt noch das eine oder andere kleine Kondensattröpfchen bildet, verdunstet dies innerhalb des abgeschlossenen Luftraumes. Eine Gefährdung der Armatur und ihrer Umgebung durch tropfende, aus einer Kondensatbildung resultierende Feuchtigkeit ist ausgeschlossen.

Der gewünschte Effekt wird dadurch unterstützt, daß man die tatsächlichen gemeinsamen Berührungs- und Abstützungsflächen zwischen Isolierkappe und Armaturengehäuse so gering wie möglich hält. In diesem Sinne ist gemäß einer bevorzugten Ausführungsform die Isolierkappe an ihrem unteren Ende dicht auf einer schmalen Schulter am Gehäuse aufgesetzt. Falls erforderlich, wird die Isolierkappe in ihrem oberen Bereich nur über schmale seitliche Stege am Gehäuse abgestützt.

Gemäß einer weiteren bevorzugten Ausführungsform ist im Sinne des dichten Abschlusses des Luftraumes zwischen Isolierkappe und Armaturengehäuse die Isolierkappe in ihrem oberen Bereich über eine Dichtung festgelegt.

Da sich unter Umständen die Kälte auch beim Armaturengehäuse auf den Stellmechanismus übertragen kann, ist in weiterer Ausgestaltung auch insoweit der Gefahr einer Kondensatbildung entgegengewirkt, als insbesondere die Spindelmutter aus einem Material geringer Wärmeleitfähigkeit, beispielsweise einem entsprechenden Kunststoff, besteht. Das gilt auch für das Handrad.

Armaturen für den in Frage stehenden Einsatzbereich sind vielfach als Hubventile ausgebildet, bei denen das Handrad eine Schutzkappe trägt, in derem oberen Ende die Hubbegrenzung für die Spindel angeordnet ist, die in der Armaturenoffenstellung in das Innere dieser Schutzkappe, gegebenenfalls bis gegen die Hubbegrenzung, eintritt. Es ist dabei auch bekannt, die entsprechende Spindellage von außen, beispielsweise durch Fenster in der Schutzkappe, einsichtig zu halten (DE-GM 89 03 056). In weiterer Ausgestaltung der Erfindung ist vorgesehen, zusätzlich zu dem äußeren Wandungsbereich des oberen Gehäuses auch den oberen Bereich der Spindel in der Offenstellung des Ventiles noch von der gegebenenfalls wärmeren Umgebungsluft im Sinne einer weiteren Vermeidung von Kondensatbildung im Bereich der Armatur zu isolieren. Zu diesem Zweck ist die Spindeleintrittskammer mittels einer Umhüllung aus einem durchsichtigen Kunststoff geringer Wärmeleitfähigkeit gegenüber der Umgebungsluft abgeschlossen. Es besteht die Möglichkeit, die Schutzkappe insgesamt aus einem derartigen Material auszubilden. Bei den bekannten metallischen Schutzkappen mit Fenstern besteht die Möglichkeit, eine Hülse aus dem entsprechenden Material in eine derartige Schutzkappe einzusetzen.

Weitere Ausgestaltungen des Erfindungsgegenstandes ergeben sich aus den Unteransprüchen.

Ausführungsbeispiele einer Armatur gemäß der Erfindung werden nachstehend unter Bezugnahme auf die beigefügte Zeichnung beschrieben.
Es zeigen
- Figur 1: eine Armatur gemäß der Erfindung in Schnittdarstellung,
- Figur 2: einen vereinfachten Teilquerschnitt durch den oberen Gehäusebereich der Armatur nach Figur 1,
- Figur 3: eine Teileinzelansicht der oberen Abdichtung der Isolierkappe der Armatur nach Figur 1,
- Figur 4: in Einzelansicht eine weitere Ausführungsform einer vom Handrad getragenen, die Spindel in der Ventiloffenstellung aufnehmenden Schutzkappe.

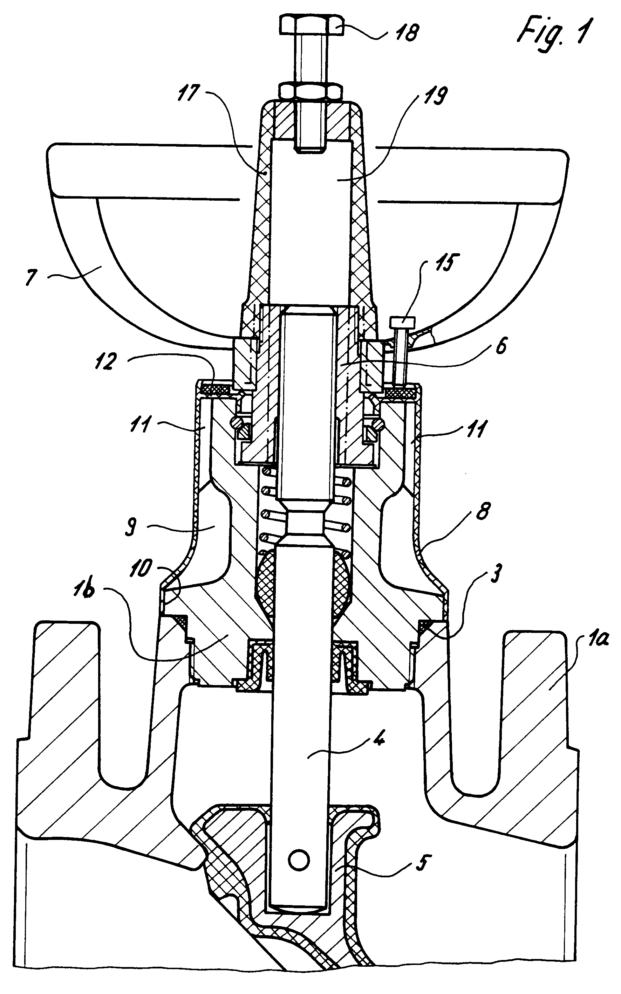

Als nicht beschränkend zu verstehende Ausführungsform für eine Armatur gemäß der Erfindung ist in Figur 1 ein Hubventil dargestellt, das in einem unteren Gehäusebereich 1a den Ventilsitz 2 aufweist, während in einem oberen Gehäuseteil 1b, das mit dem unteren Gehäuseteil 1a unter Zwischensetzung einer Dichtung 3 verschraubt ist, der wesentliche Teil des Stellmechanismus der Armatur untergebracht ist. Grundsätzlich wäre auch eine einteilige Ausbildung des Armaturengehäuses denkbar. Eine heb- und senkbare Spindel 4 trägt an ihrem unteren Ende das mit dem Ventilsitz 2 zusammenwirkende Ventilstück 5. Die Spindel 4 tritt in den oberen Gehäusebereich 1b in abgedichteter Form ein. Sie steht mit ihrem Gewindeteil mit einer im Sinne der Übertragung der Schließkräfte des Ventiles am oberen Gehäuseteil 1b abgestützten Spindelmutter 6 in Eingriff, auf der das Handrad 7 befestigt ist.

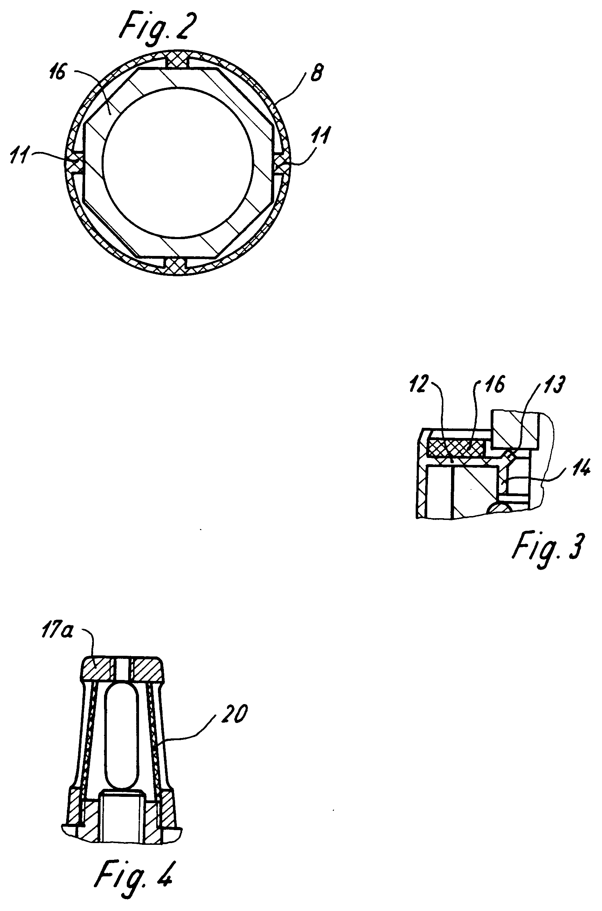

Erfindungsgemäß ist nun der obere Gehäusebereich 1b von einer Isolierkappe 8 aus einem Material geringer Wärmeleitfähigkeit, insbesondere einem Kunststoff, beispielsweise Polypropylen, umgeben. Die Isolierkappe 8 ist dabei in weiten Bereichen ihrer Erstreckung abständig von der Wandung des oberen Gehäuseteiles 1 gehalten, dergestalt, daß zwischen diesen beiden Teilen ein Luftraum 9 gebildet ist, wobei dieser Lauftraum 9 gegenüber der Umgebungsluft abgedichtet ist. Im einzelnen ist hierzu und im Sinne einer möglichst geringen Kontaktflächenbildung unmittelbar zwischen der Isolierkappe 8 und dem oberen Gehäuseteil 1b die Isolierkappe 8 an ihrem unteren Ende dicht auf einer schmalen Schulter 10 des oberen Gehäuseteiles 1b aufgesetzt. In Fällen, in denen im oberen Bereich der Isolierkappe 8 noch eine Abstützung gegenüber dem oberen Gehäuseteil 1b erforderlich ist, geschieht dies über zwei oder mehrere relativ schmale seitliche Stege 11, die an der Isolierkappe 8 angeformt sind. Diese Bauweise ist insbesondere dann sinnvoll, wenn im Sinne einer noch zu beschreibenden Doppelfunktion der Isolierkappe 8 diese zuverlässig undrehbar auf dem oberen Gehäuseteil 1b angeordnet sein soll. In einem solchen Fall wird der mit den Stegen 11 zusammenwirkende Teil des oberen Gehäusebereiches 1b in seiner Außenkontur zweckmäßig als Mehrkant ausgebildet, wie in Figur 2 gezeigt. Die beiden Stege 11 können dann mit einer ebenflächigen Abstützzone des oberen Gehäuseteiles 1b im Sinne einer undrehbaren Halterung zusammenwirken.

Im Sinne der Abdichtung des Luftraumes 9 gegenüber der Umgebungsluft ist zweckmäßig die Isolierkappe 8 im Bereich ihres oberen Endes über eine Dichtung abgestützt. Im dargestellten Ausführungsbeispiel weist die Isolierkappe 8 im Bereich des oberen Endes eine nach innen vorspringende Innenschulter 12 auf, die im einzelnen in Figur 3 gezeigt ist. Die Innenschulter 12 trägt an ihrem Innenende einerseits eine Dichtlippe 13, die an der Nabe des Handrades 7 dichtend abgestützt ist, sowie ferner aus Montagegründen einen Zentrierring 14, der in die Lagerbohrung des oberen Gehäuseteiles 1b für die Spindelmutter 6 eingreift. Im übrigen ist die Innenschulter 12 auf der oberen Stirnfläche des oberen Gehäuseteiles 1b abgestützt.

Bei einigen Ausgestaltungen derartiger Hubventile ist es zweckmäßig, die Feststellschraube 15 zur zeitweiligen Feststellung von Spindelmutter und Handrad durch eine Materialzone des Handrades 7 zu schrauben und sie von oben gegen die Stirnfläche des oberen Gehäuseteiles 1b wirken zu lassen. In einem solchen Fall wird zweckmäßig die Isolierkappe 8 oberseitig, auf der Innenschulter 12, mit einer Verschleißscheibe 16 versehen, gegen die die Feststellschraube 15 dann geschraubt wird. In eben diesem Anwendungsfall besteht auch im Sinne der Funktion der Feststellschraube das Erfordernis, die Isolierkappe 8 in jedem Fall undrehbar am oberen Gehäuseteil 1b zu halten.

Es sind Anwendungsfälle denkbar, in denen der Temperaturunterschied zwischen der von einem sehr kalten Medium durchströmten Armatur zur Umgebungsluft so groß ist, daß womöglich auch noch ein eine Kondensation hervorrufender Temperaturunterschied zwischen dem Stellmechanismus selbst und der Umgebungsluft möglich ist. In weiterer zweckmäßiger Ausgestaltung wird in einem solchen Anwendungsfall zweckmäßig auch noch die Spindelmutter 6 und/oder das Handrad 7 aus einem Material geringer Wärmeleitfähigkeit, beispielsweise einem Kunststoff wie Polypropylen oder dergleichen, hergestellt. Es kann dann dabei zweckmäßig sein, das Kunststoffmaterial zumindest im Bereich der Gewindeabschnitte dieser Teile mit einer Armierung zu versehen. In weiterer Ausgestaltung ist es ferner möglich, beispielsweise zwischen eine Spindelmutter 6 aus einem derartigen Material geringer Wärmeleitfähigkeit und einem wie üblich aus Metall bestehenden Handrad 7 in der Berührungszone dieser beiden Teile eine geflanschte Zwischenhülse aus einem Material geringer Wärmeleitfähigkeit einzusetzen, wie strichpunktiert in Figur 1 angedeutet.

Es ist bei Armaturen der in Frage stehenden Art, insbesondere auch bei Hubventilen, bekannt, auf dem Handrad 7 eine Schutzkappe 17 zu befestigen, in deren hohlen Innenraum von oben die Hubbegrenzungsschraube 18 vorsteht und in deren hohlen Innenraum von unten in der Offenstellung des Ventiles dann die Spindel 4, gegebenenfalls bis zur Anlage an der Hubbegrenzung 18, eintritt. In weiterer zweckmäßiger Ausgestaltung ist nun dafür Sorge getragen, daß auch die von dem Innenraum der Schutzkappe 17 gebildete Spindeleintrittskammer 19 und damit die womöglich auch noch recht kalte Spindel 4 in der Offenstellung des Ventiles gegenüber der warmen Umgebungsluft wärmemäßig abisoliert sind. In einer zweckmäßigen Ausgestaltung besteht hierzu die Schutzkappe 17 im wesentlichen selbst aus einem Material geringer Wärmeleitfähigkeit, das zweckmäßig zur Gewährleistung der Einsichtnahme bezüglich der jeweiligen Stellung der Spindel auch gleichzeitig noch durchsichtig ist. Geeignete Kunststoffe sind insoweit handelsüblich. Auch hier kann das Erfordernis bestehen, das Kunststoffmaterial im Bereich des Befestigungsgewindes der Schutzkappe zu armieren.

Will man eine der bekannten, mit die Einsichtnahme ermöglichenden Fenstern versehene Schutzkappe 17a gemäß Figur 4 verwenden, welche Schutzkappen aus Metall bestehen, wird in zweckmäßiger Ausgestaltung in eine derartige metallische Schutzkappe 17a eine Hülse 20 abgedichtet eingesetzt, die dann aus dem durchsichtigen Material geringer Wärmeleitfähigkeit besteht.

## Patentansprüche

1. Armatur mit einem oberen, den Stellmechanismus der Armatur aufnehmenden Gehäusebereich (1b), **dadurch** **gekennzeichnet**, daß zumindest der obere Gehäusebereich (1b) von einer Isolierkappe (8) aus einem Material geringer Wärmeleitfähigkeit umgeben ist, dabei zwischen der Außenwand des oberen Gehäuseteiles (1b) und der Isolierkappe (8) ein Luftraum (9) gebildet ist und dieser Luftraum (9) gegenüber der Umgebungsluft abgedichtet ist.

2. Armatur nach Anspruch 1, dadurch gekennzeichnet, daß die Isolierkappe (8) mit ihrem unteren Ende dicht auf einer schmalen Schulter (9) des oberen Gehäuseteiles (1b) aufgesetzt ist.

3. Armatur nach Anspruch 1 oder 2, dadurch gekennzeichnet, daß die Isolierkappe (8) in ihrem oberen Bereich seitlich durch schmale Stege (11) am oberen Gehäuseteil (1b) abgestützt ist.

4. Armatur nach einem oder mehreren der Ansprüche 1 bis 3, dadurch gekennzeichnet, daß die Isolierkappe (8) in ihrem oberen Bereich über eine Dichtung (13) festgelegt ist.

5. Armatur nach Anspruch 4, dadurch gekennzeichnet, daß die Isolierkappe (8) in ihrem oberen Bereich eine Innenschulter aufweist, die eine an einem drehbaren Teil des Stellmechanismus abgestütze Dichtlippe (13) trägt.

6. Armatur nach Anspruch 5, dadurch gekennzeichnet, daß die Innenschulter (12) der Isolierkappe (8) auf der oberen Stirnfläche des oberen Gehäuseteiles (1b) aufliegt.

7. Armatur nach Anspruch 5 oder 6, dadurch gekennzeichnet, daß die Innenschulter (12) der Isolierkappe (8) annenseitig einen Zentrierring (14) trägt.

8. Armatur nach Anspruch 3, dadurch gekennzeichnet, daß die Stege (11) der Isolierkappe (8) zur undrehbaren Abstützung der Isolierkappe an ebenflächigen Abschnitten der Außenwand des oberen Gehäuseteiles (1b) abgestützt sind.

9. Armatur nach Anspruch 8, dadurch gekennzeichnet, daß die Isolierkappe (8) auf ihrer oberen Stirnfläche ein Verschleißteil (16) trägt, gegen das eine Feststellschraube (15) zur zeitweiligen Festsetzung des Stellmechanismus der Armatur schraubbar ist.

10. Armatur nach Anspruch 1, deren Stellmechanismus eine Spindelmutter (6) beinhaltet, dadurch gekennzeichnet, daß die Spindelmutter (6) aus einem Material geringer Wärmeleitfähigkeit besteht.

11. Armatur nach Anspruch 1 oder 10, deren Stellmechanismus ein Handrad (7) beinhaltet, dadurch gekennzeichnet, daß das Handrad (7) aus einem Material geringer Wärmeleitfähigkeit besteht.

12. Armatur nach Anspruch 10 oder 11, dadurch gekennzeichnet, daß die Spindelmutter (6) bzw. das Handrad (7) aus einem Kunststoff geringer Wärmeleitfähigkeit bestehen und das Kunststoffmaterial zumindest im Bereich der Befestigungsgewinde dieser Teile armiert ist.

13. Armatur nach Anspruch 1, die ein Handrad (7) aufweist, auf dem eine Schutzkappe (17, 17a) angeordnet ist, die eine Spindeleintrittskammer (19) definiert, in die die Spindel in der Offenstellung des Ventiles eintritt, wobei der Schutzkappe die Hubbegrenzung (18) für die Ventilspindel (4) zugeordnet ist und die Spindeleintrittskammer (9) von außen einsichtbar gestaltet ist, dadurch gekennzeichnet, daß die Spindeleintrittskammer (19) mittels einer Umhüllung aus einem durchsichtigen Material geringer Wärmeleitfähigkeit gegenüber der Umgebungsluft abgeschlossen ist.

14. Armatur nach Anspruch 13, dadurch gekennzeichnet, daß die Schutzkappe (17) im wesentlichen aus dem durchsichtigen Material geringer Wärmeleitfähigkeit hergestellt ist.

15. Armatur nach Anspruch 13, dadurch gekennzeichnet, daß in eine mit Fenstern versehene Schutzkappe (17a) eine Hülse (20) aus dem durchsichtigen Material geringer Wärmeleitfähigkeit eingesetzt ist.

16. Armatur nach Anspruch 14, dadurch gekennzeichnet, daß die Schutzkappe aus einem durchsichtigen Kunststoff geringer Wärmeleitfähigkeit besteht und der Kunststoff im Bereich des Befestigungsgewindes der Schutzkappe (17) armiert ist.

17. Armatur nach Anspruch 10, dadurch gekennzeichnet, daß zwischen der Spindelmutter (6) und dem aus Metall bestehenden Handrad (7) im Bereich ihrer Berührungsflächen eine Hülse aus einem Material geringer Wärmeleitfähigkeit zwischengesetzt ist.

## Claims

1. A fitting having an upper housing region (1b) accommodating the adjusting mechanism of the fitting, characterised in that at least the upper housing region (1b) is enclosed by an insulating cap (8) comprising a material of low thermal conductivity, in that case an air space (9) is formed between the outside surface of the upper housing portion (1b) and the insulating cap (8) and said air space (9) is sealed off relative to the ambient air.

2. A fitting according to claim 1 characterised in that the insulating cap (8) is fitted with its lower end sealingly on a narrow shoulder (10) of the upper housing portion (1b).

3. A fitting according to claim 1 or claim 2 characterised in that in its upper region the insulating cap (8) is laterally supported on the upper housing portion (1b) by narrow flanges (11).

4. A fitting according to one or more of claims 1 to 3 characterised in that the insulating cap (8) is fixed in its upper region by way of a seal (13).

5. A fitting according to claim 4 characterised in that in its upper region the insulating cap (8) has an inner shoulder which carries a sealing lip (13) which is supported against a rotatable part of the adjusting mechanism.

6. A fitting according to claim 5 characterised in that the inner shoulder (12) of the insulating cap (8) lies on the upper end face of the upper housing portion (1b).

7. A fitting according to claim 5 or claim 6 characterised in that the inner shoulder (12) of the insulating cap (8) carries at its inward side a centering ring (14).

8. A fitting according to claim 3 characterised in that the flanges (11) of the insulating cap (8) are supported against flat-surfaced portions of the outside wall of the upper housing portion (1b), for non-rotatably supporting the insulating cap.

9. A fitting according to claim 8 characterised in that on its upper end face the insulating cap (8) carries a closure portion (16) against which a locking screw (15) can be screwed for temporarily fixing the adjusting mechanism of the fitting.

10. A fitting according to claim 1 whose adjusting mechanism includes a spindle nut (6) characterised in that the spindle nut (6) comprises a material of low thermal conductivity.

11. A fitting according to claim 1 or claim 10 whose adjusting mechanism includes a hand wheel (7) characterised in that the hand wheel (7) comprises a material of low thermal conductivity.

12. A fitting according to claim 10 or claim 11 characterised in that the spindle nut (6) or the hand wheel (7) respectively comprise a plastics material of low thermal conductivity and the plastics material is reinforced at least in the region of the fixing threads of said parts.

13. A fitting according to claim 1 which has a hand wheel (7) on which is arranged a guard cap (17, 17a) defining a spindle entry chamber (19) into which the spindle passes in the open position of the valve, wherein the stroke limiting means (18) for the valve spindle (4) is associated with the guard cap and the spindle entry chamber (19) is designed for its interior to be viewed from the outside, characterised in that the spindle entry chamber (19) is closed off relative to the ambient air by an enclosure comprising a transparent material of low thermal conductivity.

14. A fitting according to claim 13 characterised in that the guard cap (17) is essentially produced from the transparent material of low thermal conductivity.

15. A fitting according to claim 13 characterised in that a sleeve (20) of the transparent material of low thermal conductivity is fitted into a guard cap (17a) which is provided with windows.

16. A fitting according to claim 14 characterised in that the guard cap comprises a transparent plastics material of low thermal conductivity and the plastics material is reinforced in the region of the fixing thread of the guard cap (17).

17. A fitting according to claim 10 characterised in that a sleeve comprising a material of low thermal conductivity is interposed between the spindle nut (6) and the hand wheel (7) which comprises metal, in the region of their contact surfaces.

## Revendications

1. Appareil de robinetterie avec une partie supérieure (1b) de corps recevant le mécanisme de réglage de l'appareil de robinetterie, caractérisé en ce que la partie supérieure (1b) du corps au moins est entourée par un capuchon isolant (8) fait d'un matériau de faible conductibilité thermique, un espace rempli d'air (9) étant formé entre la paroi extérieure de la partie de corps supérieure (1b) et le capuchon isolant (8) et cet espace rempli d'air (9) étant isolé vis-à-vis de l'air environnant.

2. Appareil de robinetterie selon la revendication 1, caractérisé en ce que le capuchon isolant (8) est posé de façon étanche à son extrémité inférieure sur un épaulement (9) étroit de la partie supérieure (1b) du corps.

3. Appareil de robinetterie selon la revendication 1 ou 2, caractérisé en ce que le capuchon isolant (8) est soutenu latéralement dans sa zone supérieure sur la partie supérieure (1b) du corps par des nervures (11) étroites.

4. Appareil de robinetterie selon l'une quelconque des revendications 1 à 3, caractérisé en ce que le capuchon isolant (8) est fixé dans sa zone supérieure par l'intermédiaire d'un joint (13).

5. Appareil de robinetterie selon la revendication 4, caractérisé en ce que le capuchon isolant (8) présente dans sa zone supérieure un épaulement intérieur, qui porte une lèvre d'étanchéité (13) en appui sur une partie rotative du mécanisme de réglage.

6. Appareil de robinetterie selon la revendication 5, caractérisé en ce que l'épaulement intérieur (12) du capuchon isolant (8) repose sur la face supérieure de la partie supérieure (1b) du corps.

7. Appareil de robinetterie selon la revendication 5 ou 6, caractérisé en ce que l'épaulement intérieur (12) du capuchon isolant (8) porte du côté intérieur une bague de centrage (14).

8. Appareil de robinetterie selon la revendication 3, caractérisé en ce que les nervures (11) du capuchon isolant (8) sont soutenues en vue d'un appui empêchant la rotation du capuchon isolant sur des sections à surface plane de la paroi extérieure de la partie supérieure (1b) du corps.

9. Appareil de robinetterie selon la revendication 8, caractérisé en ce que le capuchon isolant (8) porte sur sa face supérieure une pièce d'usure (16), contre laquelle une vis de fixation (15) peut être vissée pour la fixation temporaire du mécanisme de réglage de l'appareil de robinetterie.

10. Appareil de robinetterie selon la revendication 1, dont le mécanisme de réglage contient un écrou de tige (6), caractérisé en ce que l'écrou de tige (6) se compose d'un matériau de faible conductibilité thermique.

11. Appareil de robinetterie selon la revendication 1 ou 10, dont le mécanisme de réglage comprend un volant manuel (7), caractérisé en ce que le volant manuel (7) se compose d'un matériau de faible conductibilité thermique.

12. Appareil de robinetterie selon la revendication 10 ou 11, caractérisé en ce que l'écrou de tige (6) ou le volant manuel (7) se compose d'un plastique de faible conductibilité thermique et la matière plastique est armée au moins dans la zone des filets de fixation de ces pièces.

13. Appareil de robinetterie selon la revendication 1, qui présente un volant manuel (7) sur lequel est disposé un capuchon protecteur (17, 17a) qui définit une chambre d'entrée (19) de la tige, dans laquelle la tige entre dans la position ouverte de la vanne, le capuchon protecteur étant relié au limiteur de course (18) pour la tige de vanne (4) et la chambre d'entrée de la tige (9) étant conçue de façon à permettre une vision à partir de l'extérieur, caractérisé en ce que la chambre d'entrée (19) de la tige est isolée de l'air environnant au moyen d'une enveloppe faite d'un matériau transparent de faible conductibilité thermique.

14. Appareil de robinetterie selon la revendication 13, caractérisé en ce que le capuchon protecteur (17) est fabriqué pour l'essentiel dans le matériau transparent de faible conductibilité thermique.

15. Appareil de robinetterie selon la revendication 13, caractérisé en ce qu'un manchon (20) fait du matériau transparent de faible conductibilité thermique est introduit dans un capuchon protecteur (17a) pourvu de fenêtres.

16. Appareil de robinetterie selon la revendication 14, caractérisé en ce que le capuchon protecteur se compose d'un plastique transparent de faible conductibilité thermique et le plastique est armé dans la zone du filet de fixation du capuchon protecteur (17).

17. Appareil de robinetterie selon la revendication 10, caractérisé en ce qu'un manchon fait d'un matériau de faible conductibilité thermique est intercalé entre l'écrou de tige (6) et le volant manuel (7) composé de métal, dans la zone de leurs surfaces de contact.
